(19) **Europäisches Patentamt**

**European Patent Office**

**Office européen des brevets**

(11) **EP 0 856 678 B1**

(12) **EUROPEAN PATENT SPECIFICATION**

(45) Date of publication and mention
of the grant of the patent:
**25.06.2003 Bulletin 2003/26**

(51) Int Cl.⁷: **F16D 48/06**

(21) Application number: **98101841.9**

(22) Date of filing: **03.02.1998**

(54) **Method and device for controlling the clutch of a vehicle**

Verfahren und Gerät zur Steuerung der Kupplung eines Fahrzeugs

Méthode et dispositif pour commander l'embrayage d'un véhicule

(84) Designated Contracting States:
**DE ES FR GB SE**

(30) Priority: **04.02.1997 IT TO970081**

(43) Date of publication of application:
**05.08.1998 Bulletin 1998/32**

(73) Proprietor: **MAGNETI MARELLI POWERTRAIN
S.p.A.**
**10138 Torino (IT)**

(72) Inventors:
• **Amisano, Fabrizio**
  **10144 Torino (IT)**
• **Tornatore, Giovanni**
  **10080 S. Benigno Canavese (IT)**

(74) Representative: **Cerbaro, Elena, Dr. et al**
**STUDIO TORTA S.r.l.,**
**Via Viotti, 9**
**10121 Torino (IT)**

(56) References cited:
**GB-A- 2 158 542**

## Description

The present invention relates to a method and a device for controlling the clutch of a vehicle.

As is known, during the operation of opening and closing of the clutch, for example during gear-changing or moving-off manoeuvres of the vehicle, the torque value transmitted by the engine to the drive wheels via the clutch itself depends mainly on the load acting on the clutch disc, the value of which depends on the position of the actuating lever of the clutch itself.

The clutch actuating operations are normally performed manually by the driver of the vehicle, who adjusts the approach position of the clutch so as to obtain a substantially gradual transfer of the torque through the clutch itself and therefore a comfortable travel progression of the vehicle.

From GB-A- 2 158 542 it is also known to perform the clutch actuating operations in an entirely automatic manner by means of electronic control devices which have the purpose of adjusting, during operation of the clutch, the position of the actuating lever of the clutch itself as a function of a plurality of input signals.

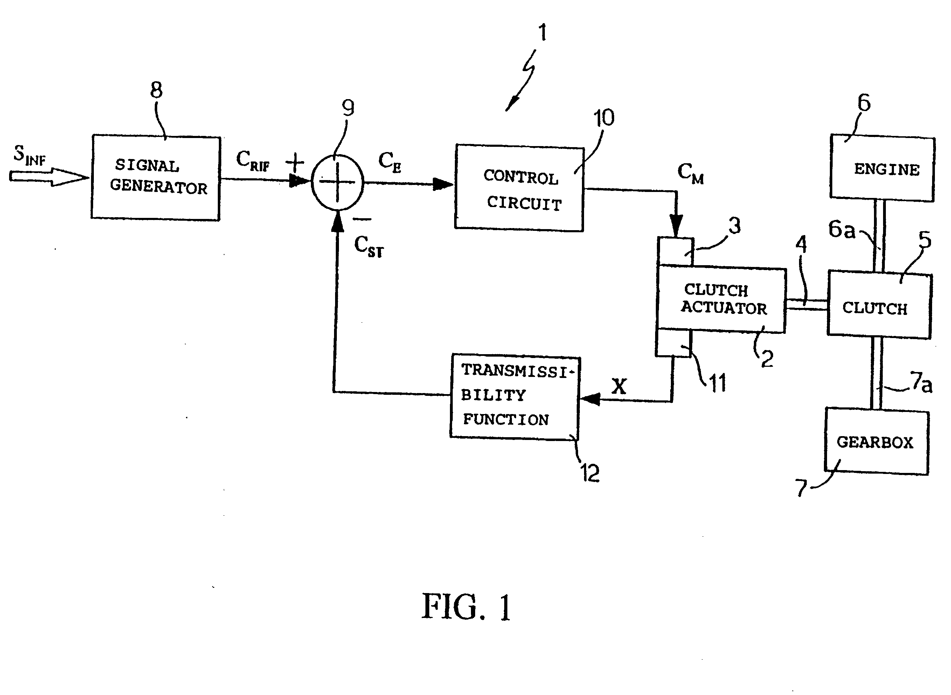

An example of embodiment of a control device of the electronic type is shown in Figure 1.

According to that shown in this figure, the control device, denoted in its entirety by 1, operates, by means of an actuator 2 driven by a solenoid valve 3, an actuating lever 4 (of the known type and shown schematically) of a clutch 5 arranged between the output shaft 6a of an engine 6 (shown schematically) and an input shaft 7a of a gearbox 7 (shown schematically).

In particular, by means of the actuating lever 4 it is possible to vary in a known manner the load therefore the torque transmitted via the clutch 5 itself.

The control device 1 comprises a signal generator circuit 8 receiving at its input a plurality of information signals $S_{INF}$, and generating at its output, on the basis of the input signals, a reference torque signal $C_{RIF}$, the instantaneous value of which indicates the desired value of the torque transmitted through the clutch 5.

In particular, the information signals $S_{INF}$, on the basis of which the reference torque signal $C_{RIF}$ is generated, are signals correlated to parameters of an operational nature and relating to the status of the vehicle, namely parameters such as, for example, the position of the accelerator pedal, the angular velocity of the engine 6, the angular velocity of the clutch 5, the position of the brake pedal, etc.

The control device 1 comprises, moreover, an adder circuit 9 receiving at its input the reference torque signal $C_{RIF}$ and an estimated torque signal $C_{ST}$, the instantaneous value of which indicates the estimated value of the torque transmitted through the clutch 5, and generating at its output an error signal $C_E$ resulting from the difference between the reference torque signal $C_{RIF}$ and the estimated torque signal $C_{ST}$.

The control device 1 comprises, moreover, a control circuit 10 of the known type, for example of the proportional-integral type PI, receiving at its input the error signal $C_E$ and generating at its output a control signal $C_M$ used for operating the solenoid valve 3 and therefore for controlling the actuator 2 and adjusting the position of the actuating lever 4.

The control device 1 comprises, moreover, a position sensor 11 coupled to the actuator 2 and generating at its output a reaction signal X correlated to the operational position of the actuator 2 (and hence to the position of the actuating lever 4 of the clutch 5) and a memory 12 receiving at its input the reaction signal X and generating at its output the clutch 5) and a memory 12 receiving at its input the reaction signal X and generating at its output the aforementioned estimated torque signal $C_{ST}$.

In particular, the memory 12 has stored in it a table containing a plurality of numerical values defining a transmissibility function F(X) of the clutch 5, which enables a corresponding value of the torque transmitted through the clutch 5 itself to be estimated for each of the positions assumed by the actuating lever 4 of the clutch 5.

In detail, the tranmissibility function F(X) of the clutch 5 defines a one-to-one association between each of the instantaneous values $x_i$ of the incoming reaction signal X and a corresponding instantaneous value, indicated by $C_{FRIZ\_OLD}$, of the outgoing estimated torque signal $C_{ST}$; therefore a plurality of pairs of values are stored in the memory 12, each pair relates to a respective position assumed by the actuating lever 4 and comprises an instantaneous value $x_i$ of the reaction signal X and a corresponding instantaneous value $C_{FRIZ\_OLD}$ of the estimated torque signal $C_{ST}$.

During use, the control device 1 operates in the form of a closed loop following the reference torque signal $C_{RIF}$, generated by the signal generator circuit 8 and operating, via the solenoid valve 3, the actuator 2 of the actuating lever 4 of the clutch 5. In particular, on the basis of the position of the actuator 2, the memory 12 generates at its output the estimated torque signal $C_{ST}$ supplied to the adder circuit 9 so that the torque transmitted to the drive wheels of the vehicle is as far as possible identical to the desired torque, in order to obtain a substantially gradual transfer of the torque through the clutch 5 and therefore a comfortable travel progression of the vehicle.

The progression, over time, of the torque transmitted through the clutch 5 during operation of the clutch 5 itself depends substantially on the progression of the aforementioned transmissibility function F(X), which is in turn dependent upon the mechanical characteristics of the clutch 5.

The mechanical characteristics of the clutch 5, however, are subject to changes during the life of the clutch 5 itself on account of inevitable phenomena of wear and variations in the operating temperature of the clutch 5.

Therefore, when the transmissibility function F (X) no longer reflects the actual mechanical characteristics of the clutch 5, electronic control of the torque transmitted through the clutch 5 becomes unreliable and therefore results in a worsening in the performance of the vehicle during the gear-changing and moving-off manoeuvres.

The object of the present invention is that of providing a method and a device for controlling the clutch of a vehicle, which enable the problems of electronic control devices of the known type to be resolved in a simple and economical manner.

According to the present invention a method for controlling the clutch of a vehicle is provided, said clutch being arranged between an output member of an engine and an input member of a gearbox and being operated by at least one actuating member movable between a first end-of-travel position in which said clutch is completely open and a second end-of-travel position in which said clutch is completely closed; said method comprising the stages of:

- generating a reference torque signal representing at least one desired value of the torque transmitted through the said clutch;
- generating an estimated torque signal representing at least one estimated value of the torque transmitted through the said clutch;
- generating a control signal for adjusting the position of said actuating member of the clutch as a function of the said reference torque signal and the said estimated torque signal;

characterized in that said estimated torque signal is generated as a function of a first and a second operational signal correlated to values assumed by the torque produced by the said engine and, respectively, by the angular velocity of the engine itself.

According to the present invention, a device for controlling the clutch of a vehicle is also provided, said clutch being arranged between an output member of an engine and an input member of a gearbox and being operated by means of at least one actuating member movable between a first end-of-travel position in which said clutch is completely open and a second end-of-travel position in which said clutch is completely closed; said control device comprising:

- first signal generating means generating a reference torque signal representing at least one desired value of the torque transmitted through the said clutch;
- second signal generating means generating an estimated torque signal representing at least one estimated value of the torque transmitted through the said clutch;
- control means receiving at their input said reference torque signal and said estimated torque signal and generating at their output a control signal for adjusting the position of the said clutch actuating member;

characterized in that said second signal generating means generate said estimated torque signal as a function of a first and a second operational signal correlated to values assumed by the torque produced by the engine and, respectively, by the angular velocity of the engine itself.

In order that the invention may be more fully understood, a description of a preferred embodiment is now provided, purely by way of a non-limiting example, with reference to the accompanying drawings, in which:

- Figure 1 is a block diagram of a device for controlling a clutch of the known type;
- Figure 2 is a block diagram of a device for controlling a clutch provided in accordance with the present invention; and
- Figure 3 is a flow diagram relating to the method according to the present invention.

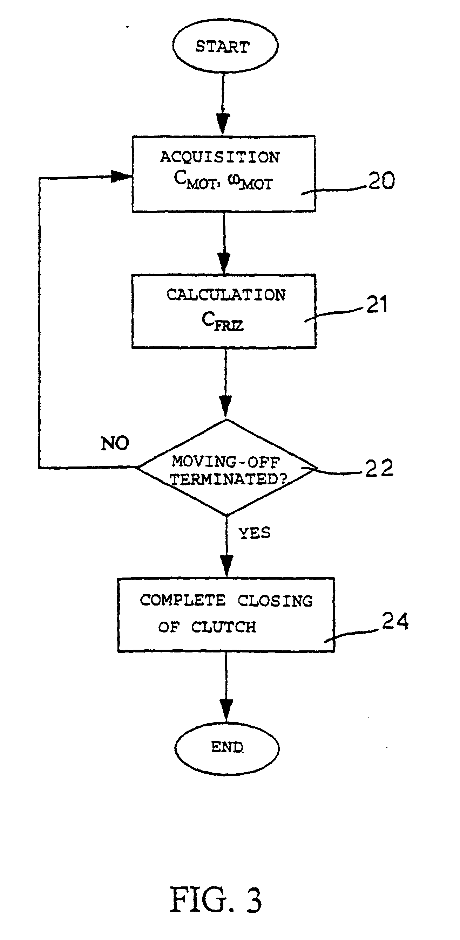

The present invention is based on the principle of controlling the clutch 5 during every vehicle moving-off and gear-changing manoeuvre generating the estimated torque signal $C_{ST}$ supplied to the adder 9 as a function of a first and a second operational signal correlated to values assumed by the torque produced by the engine 6 and by the angular velocity of the engine 6 itself, and not, as described above, as a function of the position of the actuating lever 4 of the clutch 5, by performing a series of operations illustrated in detail in the flow diagram of Figure 3 and implemented by a gearbox control unit (not shown).

In particular, during operation of the clutch 5 in vehicle moving-off and gear-changing manoeuvres, the actuating lever 4 assumes a plurality of adjacent positions comprised between a first end-of-travel position in which the clutch 5 is completely open, and a second end-of-travel position in which the clutch 5 is completely closed, and therefore, in accordance with the present invention, the operations illustrated in the flow diagram of Figure 3 for controlling the position of the actuating lever 4 of the clutch 5 are repeated for each of the intermediate positions comprised between the first and the second end-of-travel position.

In detail, the present invention is based on the principle of acquiring, for each of the intermediate positions assumed by the clutch 5, an effective value $C_{MOT}$ of the torque produced by the engine 6 and an effective value $\overline{\omega}_{MOT}$ of the angular velocity of the engine 6 in the particular position considered of the clutch 5, and calculating a corresponding estimated value, indicated by $C_{FRIZ}$, of the torque transmitted by the clutch 5 as a function of the effective values $C_{MOT}$ and $\overline{\omega}_{MOT}$, using the following equation of dynamic equilibrium:

$$C_{FRIZ} = C_{MOT} - J_{MOT} \cdot \frac{d\bar{\omega}_{MOT}}{dt} \qquad 1)$$

in which $J_{MOT}$ is the moment of inertia of the engine 6.

Each value $C_{FRIZ}$ represents an estimate of the torque transmitted through the clutch 5 and defines the instantaneous value assumed by the estimated torque signal $C_{ST}$ in the considered position of the actuating lever 4.

Therefore the time sequence of the estimated values $C_{FRIZ}$ calculated with the equation 1) in each of the intermediate positions assumed by the actuating lever 4 of the clutch 5 therefore defines the estimated torque signal $C_{ST}$ supplied to the adder 9 for controlling the clutch 5, while the time sequences of the pairs of effective values $C_{MOT}$ and $\bar{\omega}_{MOT}$ acquired define the aforementioned first and, respectively, second operational signal on the basis of which the estimated torque signal $C_{ST}$ is calculated.

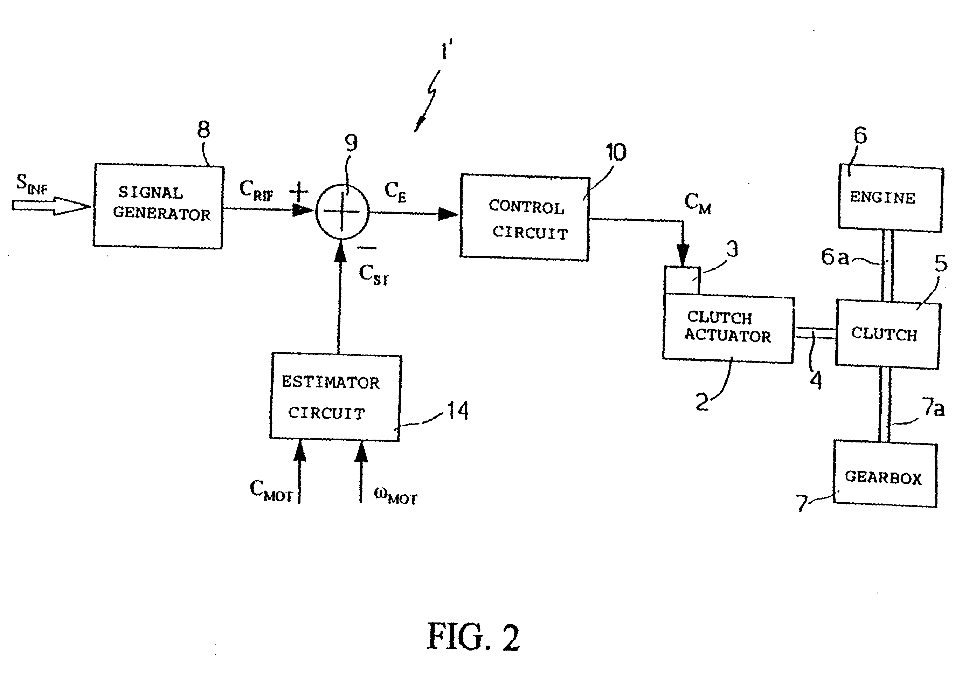

A block diagram of a control device provided in accordance with the present invention is illustrated in Figure 2.

The control device according to Figure 2, denoted in its entirety by 1', comprises a signal generator circuit 8, an adder circuit 9 and a control circuit 10 entirely similar to those according to Figure 1 and therefore indicated by the same numbers and not described again in detail. Moreover, similar to the control device according to Figure 1, the control device 1' operates, by means of an actuator 2 driven by a solenoid valve 3, an actuating lever 4 of a clutch 5 arranged between an output shaft 6a of an engine 6 and an input shaft 7a of a gearbox 7.

The control device 1' comprises, moreover, unlike the control device 1 according to Figure 1, an estimator circuit 14 receiving at its input a first and a second operational signal correlated to values assumed by the torque produced by the engine 6 and, respectively, by the angular velocity of the engine 6 itself and generating at its output the aforementioned estimated torque signal $C_{ST}$.

In particular, in order to generate the estimated torque signal $C_{ST}$, the estimator circuit 14 performs the operations illustrated in the flow diagram according to Figure 3, which start when the actuating lever 4 of the clutch 5 is arranged, during the vehicle moving-off or gear-changing manoeuvre, in the first end-of-travel position where the clutch 5 is completely open.

In order to detect that the vehicle is performing a moving-off manoeuvre, namely a manoeuvre involving gradual closure, with the vehicle at a standstill, of the clutch 5 in order to raise the number of revolutions of the input shaft 7a of the gearbox 7 so as to be substantially equal to the number of revolutions of the output shaft 6a of the engine 6, the logic status (0 or 1) of a logic flag memorized in the gearbox control unit is read and updated by the control unit itself during normal operation of the vehicle.

Similarly, in order to detect that the vehicle is performing a gear-changing manoeuvre, the logic status (0 or 1) of another logic flag memorized in the gearbox control unit is read and updated by the control unit itself during normal operation of the vehicle.

In accordance with that shown in Figure 3, initially a step 20 is reached, where a pair of effective values $C_{MOT}$ and $\bar{\omega}_{MOT}$ of the torque produced by the engine 6 and its angular velocity are acquired; in particular, the effective values $C_{MOT}$ and $\bar{\omega}_{MOT}$ of the torque produced by the engine 6 and its angular velocity are provided by an engine control unit (not shown) which, for each particular instant, detects the instantaneous value thereof.

From step 20 one passes to step 21 where, on the basis of the detected values $C_{MOT}$ and $\bar{\omega}_{MOT}$, an estimated value $C_{FRIZ}$ of the torque transmitted through the clutch 5 is calculated by means of the equation 1).

The estimated value $C_{FRIZ}$ of the torque transmitted through the clutch 5 is then supplied to the adder circuit 9 in order to perform adjustment of the position of the actuating lever 4 of the clutch 5.

From step 21 one passes to step 22 where it is verified whether the vehicle moving-off or gear-changing manoeuvre has terminated, namely whether the number of revolutions of the input shaft 7a of the gearbox 7 is substantially equal to the number of revolutions of the output shaft 6a of the engine 6.

In particular, at step 22 it is verified whether the difference between the angular velocity $\bar{\omega}_{MOT}$ of the output shaft 6a of the engine 6 and the angular velocity $\bar{\omega}_{CAM}$ of the input shaft 7a of the gearbox 7 is, in terms of an absolute value, less than a predetermined threshold value, namely it is verified whether:

$$|\bar{w}_{MOT} - \bar{w}_{FRIZ}| < threshold \qquad 2)$$

The value $\bar{\omega}_{CAM}$ of the angular velocity of the input shaft 7a of the gearbox 7 is for example supplied by a gearbox control unit (not shown) which, for each particular instant, detects the instantaneous value thereof.

If the vehicle moving-off or gear-changing manoeuvre has not yet terminated, namely if the aforementioned difference is greater than the predetermined threshold value (option NO of step 22), then the operations for controlling the position of the actuating lever 4 of the clutch 5 recommence with those described in connection with step 20; otherwise, if the manoeuvre has terminated (option YES of step 22), then the operations for controlling the position of the actuating lever 4 of the clutch 5 are terminated and will recommence with those described in connection with step 20 at the next moving-off manoeuvre performed by the vehicle, and the control circuit 10 performs complete closing of the clutch 5 (step 24).

When the vehicle moving-off or gear-changing manoeuvre has terminated, the control device 1' of Figure 2 is deactivated or reactivated at the next moving-off or gear-changing manoeuvre- performed by the vehicle.

From the above it is clear how the control device 20 described operates in a closed loop following the reference torque signal $C_{RIF}$ generated by the signal generator circuit 8 and operating, via the solenoid valve 3, the actuator 2 of the actuating lever 4 of the clutch 5.

In particular, the closed-loop control is performed, in contrast with the control device 1 according to Figure 1, no longer by using the direct information relating to the position of the actuating lever 4 of the clutch 5, but by using the information relating to the torque produced by the engine 6 and to the angular velocity thereof.

Therefore, by means of the present control device 1', electronic control of the torque transmitted by the clutch 5 is performed without using the transmissibility function F(X) of the clutch 5 and in this way the drawbacks of the control devices of the known type are eliminated, i.e. those associated with the limited reliability of the electronic control performed, due to the variations, over time, in the mechanical characteristics of the clutch 5 itself.

Moreover, the control device 1' according to Figure 2 is able to co-operate with the control device 1 according to Figure 1 so as to allow the electronic control of the clutch 5 even in the case of malfunctioning or breakage of the position sensor 11 coupled to the actuator 2. In the event of malfunctioning or breakage of the position sensor 11, in fact, the reaction signal X generated by it is unreliable or, respectively, absent and consequently also the estimated torque signal $C_{ST}$ generated by the memory 12 is unreliable or absent and therefore the electronic control performed by the control device 1 is incorrect. By activating, on the other hand, the control device 1', it is possible to perform, however, electronic control of the clutch 5 since the estimated torque signal $C_{ST}$ is generated by the estimator circuit 14 on the basis of the effective values $C_{MOT}$ and $\bar{\omega}_{MOT}$ of the torque produced by the engine 6 and its angular velocity.

Finally the present control device 1' is simple, easy to implement and allows simplification of the control device 1 according to Figure 1 since it is no longer necessary to use the position sensor 11 and the memory 12, with a consequent reduction in the costs of manufacture of the device and an increase in the overall reliability of the device itself.

Finally, it is obvious that modifications and variations may be made to the method and to the device described and illustrated herein, without thereby departing from the protective scope of the present claims.

## Claims

1. Method for controlling the clutch of a vehicle, said clutch (5) being arranged between an output member (6a) of an engine (6) and an input member (7a) of a gearbox (7) and being operated by at least one actuating member (4) movable between a first end-of-travel position in which said clutch (5) is completely open and a second end-of-travel position in which said clutch (5) is completely closed; said method comprising the stages of:

   - generating a reference torque signal ($C_{RIF}$) representing at least one desired value of the torque transmitted through the said clutch (5);
   - generating an estimated torque signal ($C_{ST}$) representing at least one estimated value of the torque transmitted through the said clutch (5);
   - generating a control signal ($C_M$) for adjusting the position of said actuating member (4) of the clutch (5) as a function of the said reference torque signal ($C_{RIF}$) and the said estimated torque signal ($C_{ST}$);

   **characterized in that** said estimated torque signal ($C_{ST}$) is generated as a function of a first and a second operational signal correlated to values assumed by the torque produced by the said engine (6) and, respectively, the angular velocity of the engine (6) itself.

2. Method according to Claim 1, **characterized in that** said stage for generating an estimated torque signal ($C_{ST}$) comprises the stage of repeating, for each of the positions assumed by the said actuating member (4) of the clutch (5) during operation of the clutch (5) itself, the following substages:

   - acquiring an effective value ($C_{MOT}$) of torque produced by the engine (6) of the said vehicle;
   - acquiring an effective value ($\bar{\omega}_{MOT}$) of angular velocity of the said engine (6); and
   - calculating an estimated value ($C_{FRIZ}$) of torque transmitted through the said clutch (5) on the basis of the said effective value ($C_{MOT}$) of torque produced by the engine (6) and the said effective value ($\bar{\omega}_{MOT}$) of angular velocity of the engine (6) itself, said estimated value ($C_{FRIZ}$) of transmitted torque defining an instantaneous value assumed by said estimated torque signal ($C_{ST}$) at the considered position of the actuating member (4).

3. Method according to Claim 2, **characterized in that** said stage for calculating an estimated value ($C_{FRIZ}$) of torque transmitted through the said clutch (5) comprises the stage of determining the said estimated value ($C_{FRIZ}$) in accordance with the rela-

tion:

$$C_{FRIZ} = C_{MOT} - J_{MOT} \cdot \frac{d\bar{\omega}_{MOT}}{dt}$$

where $C_{FRIZ}$ represents the estimated value of torque transmitted through the clutch (5), $J_{MOT}$ represents the moment of inertia of the engine (6), $C_{MOT}$ represents the effective value of torque produced by the engine (6) and $\bar{\omega}_{MOT}$ represents the effective value of angular velocity of the engine (6) itself.

4. Device for controlling the clutch of a vehicle, said clutch (5) being arranged between an output member (6a) of an engine (6) and an input member (7a) of a gearbox (7) and being operated by means of at least one actuating member (4) movable between a first end-of-travel position in which said clutch (5) is completely open and a second end-of-travel position in which said clutch (5) is completely closed; said control device (1') comprising:

   - first signal generating means (8) generating a reference torque signal ($C_{RIF}$) representing at least one desired value of the torque transmitted through the said clutch (5);
   - second signal generating means (14) generating an estimated torque signal ($C_{ST}$) representing at least one estimated value of the torque transmitted through the said clutch (5);
   - control means (9, 10) receiving at their input said reference torque signal ($C_{RIF}$) and said estimated torque signal ($C_{ST}$) and generating at their output a control signal ($C_M$) for adjusting the position of the said actuating member (4) of the clutch (5) ;

   **characterized in that** said second signal generating means (14) generate said estimated torque signal ($C_{ST}$) as a function of a first and a second operational signal correlated to values assumed by the torque produced by the engine (6) and, respectively, by the angular velocity of the engine (6) itself.

5. Device according to Claim 4, **characterized in that** said second signal generating means (14) comprise repeating means (22) designed to operate cyclically, for each of the positions assumed by the said actuating member (4) of the clutch (5) during operation of the clutch (5) itself:

   - first means (20) for acquiring an effective value ($C_{MOT}$) of torque produced by the engine (6) of the said vehicle;
   - second means (20) for acquiring an effective

value ($\bar{\omega}_{MOT}$) of angular velocity of the said engine (6);
   - calculating means (21) designed to determine an estimated value ($C_{FRIZ}$) of torque transmitted through the said clutch (5) on the basis of the said effective value ($C_{MOT}$) of torque produced by the engine (6) and the said effective value ($\bar{\omega}_{MOT}$) of angular velocity of the engine (6) itself, said estimated value ($C_{FRIZ}$) of transmitted torque defining an instantaneous value assumed by said estimated torque signal ($C_{ST}$) at the considered position of the actuating member (4).

6. Device according to Claim 5, **characterized in that** said calculating means (21) operate in accordance with the relation:

$$C_{FRIZ} = C_{MOT} - J_{MOT} \cdot \frac{d\bar{\omega}_{MOT}}{dt}$$

where $C_{FRIZ}$ represents the estimated value of torque transmitted through the clutch (5), $J_{MOT}$ represents the moment of inertia of the engine (6), $C_{MOT}$ represents the effective value of torque produced by the engine (6) and $\bar{\omega}_{MOT}$ represents the effective value of angular velocity of the engine (6) itself.

**Patentansprüche**

1. Verfahren zum Steuern der Kupplung eines Fahrzeugs, wobei die Kupplung (5) zwischen einem Abtriebselement (6a) eines Motors (6) und einem Antriebselement (7a) eines Getriebes (7) angeordnet ist und durch wenigstens ein Betätigungselement (4) betätigt wird, das zwischen einer ersten Bahnende-Position, in der die Kupplung (5) vollständig ausgerückt ist, und einer zweiten Bahnende-Position, in der die Kupplung (5) vollständig eingerückt ist, beweglich ist; wobei das Verfahren die folgenden Schritte umfaßt:

   - Erzeugen eines Referenzdrehmomentsignals ($C_{RIF}$), das wenigstens einen Sollwert des über die Kupplung (5) übertragenen Drehmoments repräsentiert;
   - Erzeugen eines Schätzdrehmomentsignals ($C_{ST}$), das wenigstens einen Schätzwert des über die Kupplung (5) übertragenen Drehmoments repräsentiert;
   - Erzeugen eines Steuersignals ($C_M$) für die Einstellung der Position des Betätigungselements (4) der Kupplung (5) in Abhängigkeit von dem Referenzdrehmomentsignal ($C_{RIF}$) und dem Schätzdrehmoment ($C_{ST}$),

**dadurch gekennzeichnet, daß** das Schätzdrehmomentsignal ($C_{ST}$) in Abhängigkeit von einem ersten und von einem zweiten Betriebssignal erzeugt wird, das mit Werten korreliert ist, die das von dem Motor (6) erzeugte Drehmoment bzw. die Winkelgeschwindigkeit des Motors (6) selbst annehmen.

2. Verfahren nach Anspruch 1, **dadurch gekennzeichnet, daß** der Schritt des Erzeugens eines Schätzdrehmomentsignals ($C_{ST}$) den Schritt umfaßt, bei dem für jede der von dem Betätigungselement (4) der Kupplung (5) während des Betriebs der Kupplung (5) selbst eingenommenen Positionen die folgenden Unterschritte wiederholt werden:

   - Erfassen eines Effektivwerts ($C_{MOT}$) des von dem Motor (6) des Fahrzeugs erzeugten Drehmoments;
   - Erfassen eines Effektivwerts ($\omega_{MOT}$) der Winkelgeschwindigkeit des Motors (6); und

   Berechnen eines Schätzwerts ($C_{FRIZ}$) des über die Kupplung (5) übertragenen Drehmoments auf der Grundlage des Effektivwerts ($C_{MOT}$) des von dem Motor (6) erzeugten Drehmoments und des Effektivwerts ($\omega_{MOT}$) der Winkelgeschwindigkeit des Motors (6) selbst, wobei der Schätzwert ($C_{FRIZ}$) des übertragenen Drehmoments einen Momentanwert definiert, den das Schätzdrehmomentsignal ($C_{ST}$) an der betrachteten Position des Betätigungselements (4) annimmt.

3. Verfahren nach Anspruch 2, **dadurch gekennzeichnet, daß** der Schritt des Berechnens eines Schätzwerts ($C_{FRIZ}$) des über die Kupplung (5) übertragenen Drehmoments den Schritt umfaßt, bei dem der Schätzwert ($C_{FRIZ}$) in Übereinstimmung mit der folgenden Beziehung bestimmt wird:

$$C_{FRIZ} = C_{MOT} - J_{MOT} \cdot d\omega_{MOT}/dt$$

wobei $C_{FRIZ}$ den Schätzwert des über die Kupplung (5) übertragenen Drehmoments repräsentiert, $J_{MOT}$ das Trägheitsmoment des Motors (6) repräsentiert, $C_{MOT}$ den Effektivwert des von dem Motor (6) erzeugten Drehmoments repräsentiert und $\omega_{MOT}$ den Effektivwert der Winkelgeschwindigkeit des Motors (6) selbst repräsentiert.

4. Vorrichtung zum Steuern der Kupplung eines Fahrzeugs, wobei die Kupplung (5) zwischen einem Abtriebselement (6a) eines Motors (6) und einem Antriebselement (7a) eines Getriebes (7) angeordnet ist und mittels wenigstens eines Betätigungselements (4) betrieben wird, das zwischen einer ersten Bahnende-Position, in der die Kupplung (5) vollständig ausgerückt ist, und einer zweiten Bahnende-Position, in der die Kupplung (5) vollständig eingerückt ist, beweglich ist; wobei die Steuervorrichtung (1') umfaßt:

   - erste Signalerzeugungsmittel (8), die ein Referenzdrehmomentsignal ($C_{RIF}$) erzeugen, das wenigstens einen Sollwert des über die Kupplung (5) übertragenen Drehmoments repräsentiert;
   - zweite Signalerzeugungsmittel (14), die ein Schätzdrehmomentsignal ($C_{ST}$) erzeugen, das wenigstens einen Schätzwert des über die Kupplung (5) übertragenen Drehmoments repräsentiert;
   - Steuermittel (9, 10), die an ihrem Eingang das Referenzdrehmomentsignal ($C_{RIF}$) und das Schätzdrehmomentsignal ($C_{ST}$) empfangen und an ihrem Ausgang ein Steuersignal ($C_M$) erzeugen, um die Position des Betätigungselements (4) der Kupplung (5) einzustellen;

   **dadurch gekennzeichnet, daß** die zweiten Signalerzeugungsmittel (14) das Schätzdrehmomentsignal ($C_{ST}$) in Abhängigkeit von einem ersten und von einem zweiten Betriebssignal erzeugen, das mit Werten korreliert ist, die das von dem Motor (6) erzeugte Drehmoment bzw. die Winkelgeschwindigkeit des Motors (6) selbst annehmen.

5. Vorrichtung nach Anspruch 4, **dadurch gekennzeichnet, daß** die zweiten Signalerzeugungsmittel (14) Wiederholungsmittel (22) umfassen, die so beschaffen sind, daß sie für jede der von dem Betätigungselement (4) der Kupplung (5) während des Betriebs der Kupplung (5) selbst eingenommenen Positionen folgende Mittel zyklisch betreiben:

   - erste Mittel (20), die einen Effektivwert ($C_{MOT}$) des von dem Motor (6) des Fahrzeugs erzeugten Drehmoments erfassen;
   - zweite Mittel (20), die einen Effektivwert ($\omega_{MOT}$) der Winkelgeschwindigkeit des Motors (6) erfassen;
   - Berechnungsmittel (21), die so beschaffen sind, daß sie einen Schätzwert ($C_{FRIZ}$) des über die Kupplung (5) übertragenen Drehmoments auf der Grundlage des Effektivwerts ($C_{MOT}$) des von dem Motor (6) erzeugten Drehmoments und des Effektivwerts ($\omega_{MOT}$) der Winkelgeschwindigkeit des Motors (6) selbst bestimmen, wobei der Schätzwert ($C_{FRIZ}$) des übertragenen Drehmoments einen Momentanwert definiert, den das Schätzdrehmomentsignal ($C_{ST}$) an der betrachteten Position des Betätigungselements (4) annimmt.

6. Vorrichtung nach Anspruch 5, **dadurch gekenn-**

**zeichnet, daß** die Berechnungsmittel (21) in Übereinstimmung mit der folgenden Beziehung arbeiten:

$$C_{FRIZ} = C_{MOT} - J_{MOT} \cdot d\omega_{MOT}/dt$$

wobei $C_{FRIZ}$ den Schätzwert des über die Kupplung (5) übertragenen Drehmoments repräsentiert, $J_{MOT}$ das Trägheitsmoment des Motors (6) repräsentiert, $C_{MOT}$ den Effektivwert des von dem Motor (6) erzeugten Drehmoments repräsentiert und $\omega_{MOT}$ den Effektivwert der Winkelgeschwindigkeit des Motors (6) selbst repräsentiert.

## Revendications

1. Procédé pour commander l'embrayage d'un véhicule, ledit embrayage (5) étant agencé entre un élément de sortie (6a) d'un moteur (6) et un élément d'entrée (7a) d'une boîte de vitesses (7) et étant actionné par au moins un élément d'actionnement (4) mobile entre une première position de fin de course dans laquelle ledit embrayage (5) est complètement ouvert et une deuxième position de fin de course dans laquelle ledit embrayage (5) est complètement fermé ; ledit procédé comprenant les étapes consistant à :

   - générer un signal de couple de référence ($C_{RIF}$) représentant au moins une valeur souhaitée du couple transmis par l'intermédiaire dudit embrayage (5) ;
   - générer un signal de couple estimé ($C_{ST}$) représentant au moins une valeur estimée du couple transmis par l'intermédiaire dudit embrayage (5) ;
   - générer un signal de commande ($C_M$) pour ajuster la position dudit élément d'actionnement (4) de l'embrayage (5) en fonction dudit signal de couple de référence ($C_{RIF}$) et dudit signal de couple estimé ($C_{ST}$) ;

   **caractérisé en ce que** ledit signal de couple estimé ($C_{ST}$) est généré en fonction de premier et deuxième signaux opérationnels dépendant des valeurs prises par le couple produit par ledit moteur (6) et, respectivement, par la vitesse angulaire du moteur (6) lui-même.

2. Procédé selon la revendication 1, **caractérisé en ce que** ladite étape pour générer un signal de couple estimé ($C_{ST}$) comprend l'étape consistant à répéter, pour chacune des positions adoptées par ledit élément d'actionnement (4) de l'embrayage (5) pendant l'actionnement de l'embrayage (5) lui-même, les étapes secondaires suivantes :

   - acquérir une valeur réelle ($C_{MOT}$) du couple produit par le moteur (6) dudit véhicule ;
   - acquérir une valeur réelle ($\bar{\omega}_{MOT}$) de la vitesse angulaire dudit moteur (6) ; et
   - calculer une valeur estimée ($C_{FRIZ}$) du couple transmis par l'intermédiaire dudit embrayage (5) sur la base de ladite valeur réelle ($C_{MOT}$) du couple produit par le moteur (6) et de ladite valeur réelle ($\bar{\omega}_{MOT}$) de la vitesse angulaire du moteur (6) lui-même, ladite valeur estimée ($C_{FRIZ}$) du couple transmis définissant une valeur instantanée prise par ledit signal de couple estimé ($C_{ST}$) à la position considérée de l'élément d'actionnement (4).

3. Procédé selon la revendication 2, **caractérisé en ce que** ladite étape pour calculer une valeur estimée ($C_{FRIZ}$) du couple transmis par l'intermédiaire dudit embrayage (5) comprend l'étape consistant à déterminer ladite valeur estimée ($C_{FRIZ}$) conformément à la relation :

$$C_{FRIZ} = C_{MOT} - J_{MOT} \cdot \frac{d\bar{\omega}_{MOT}}{dt}$$

où $C_{FRIZ}$ représente la valeur estimée du couple transmis par l'intermédiaire de l'embrayage (5), $J_{MOT}$ représente le moment d'inertie du moteur (6), $C_{MOT}$ représente la valeur réelle du couple produit par le moteur (6) et $\bar{\omega}_{MOT}$ représente la valeur réelle de la vitesse angulaire du moteur (6) lui-même.

4. Dispositif pour commander l'embrayage d'un véhicule, ledit embrayage (5) étant agencé entre un élément de sortie (6a) d'un moteur (6) et un élément d'entrée (7a) d'une boîte de vitesses (7) et étant actionné au moyen d'au moins un élément d'actionnement (4) mobile entre une première position de fin de course dans laquelle ledit embrayage (5) est complètement ouvert et une deuxième position de fin de course dans laquelle ledit embrayage (5) est complètement fermé ; ledit dispositif de commande (1') comprenant :

   - des premiers moyens de génération de signal (8) générant un signal de couple de référence ($C_{RIF}$) représentant au moins une valeur souhaitée du couple transmis par l'intermédiaire dudit embrayage (5) ;
   - des deuxièmes moyens de génération de signal (14) générant un signal de couple estimé ($C_{ST}$) représentant au moins une valeur estimée du couple transmis par l'intermédiaire dudit embrayage (5) ;
   - des moyens de commande (9, 10) recevant à leur entrée ledit signal de couple de référence

($C_{RIF}$) et ledit signal de couple estimé ($C_{ST}$) et générant à leur sortie un signal de commande ($C_M$) pour ajuster la position dudit élément d'actionnement (4) de l'embrayage (5) ;

**caractérisé en ce que** lesdits deuxièmes moyens de génération de signal (14) génèrent ledit signal de couple estimé ($C_{ST}$) en fonction de premier et deuxième signaux opérationnels dépendant des valeurs prises par le couple produit par le moteur (6) et, respectivement, par la vitesse angulaire du moteur (6) lui-même.

5. Dispositif selon la revendication 4, **caractérisé en ce que** lesdits deuxièmes moyens de génération de signal (14) comprennent des moyens de répétition (22) conçus pour fonctionner de manière cyclique, pour chacune des positions adoptées par ledit élément d'actionnement (4) de l'embrayage (5) pendant l'actionnement de l'embrayage (5) lui-même :

   - des premiers moyens (20) pour acquérir une valeur réelle ($C_{MOT}$) du couple produit par le moteur (6) dudit véhicule ;
   - des deuxièmes moyens (20) pour acquérir une valeur réelle ($\bar{\omega}_{MOT}$) de la vitesse angulaire dudit moteur (6) ; et
   - des moyens de calcul (21) conçus pour déterminer une valeur estimée ($C_{FRIZ}$) du couple transmis par l'intermédiaire dudit embrayage (5) sur la base de ladite valeur réelle ($C_{MOT}$) du couple produit par le moteur (6) et de ladite valeur réelle ($\bar{\omega}_{MOT}$) de la vitesse angulaire du moteur (6) lui-même, ladite valeur estimée ($C_{FRIZ}$) du couple transmis définissant une valeur instantanée prise par ledit signal de couple estimé ($C_{ST}$) à la position considérée de l'élément d'actïonnement (4).

6. Dispositif selon la revendication 5, **caractérisé en ce que** lesdits moyens de calcul (21) fonctionnent conformément à la relation :

$$C_{FRIZ} = C_{MOT} - J_{MOT} - \frac{d\bar{\omega}_{MOT}}{dt}$$

où $C_{FRIZ}$ représente la valeur estimée du couple transmis par l'intermédiaire de l'embrayage (5), $J_{MOT}$ représente le moment d'inertie du moteur (6), $C_{MOT}$ représente la valeur réelle du couple produit par le moteur (6) et $\bar{\omega}_{MOT}$ représente la valeur réelle de la vitesse angulaire du moteur (6) lui-même.

FIG. 1

EP 0 856 678 B1

FIG. 2

EP 0 856 678 B1

FIG. 3